# EUROPEAN PATENT APPLICATION

(11) **EP 4 528 146 A1**
(43) Date of publication of application: **26.03.2025**
(21) Application number: 23203788.7
(22) Date of filing: 16.10.2023
(51) Int. Cl.: F17C 11/00, H01M 8/04082

(54) **HYDROGEN STORAGE PRESSURE VESSEL, HYDROGEN STORAGE SYSTEM AND USE**

(30) Priority: 20.09.2023 CN 202311224326
(71) Applicant: Luoda Wasserstoff Energieausrüstung GmbH, 311247 Hangzhou Zhejiang Province (CN)
(72) Inventor: CHEN, Lujun, Hangzhou, 311247 (CN); YANG, Chun, Hangzhou, 311247 (CN)
(74) Representative: Bayramoglu et al.

(57) **Abstract**

The present disclosure belongs to the technical field of hydrogen storage systems, and particularly discloses a hydrogen storage pressure vessel, and a hydrogen storage system and use thereof. The hydrogen storage pressure vessel includes a first sealing cover, a second sealing cover, and a plurality of hydrogen storage units between the first sealing cover and the second sealing cover, where the first sealing cover, the second sealing cover and the hydrogen storage units are fixed by a pulling rod between the first sealing cover and the second sealing cover; and the hydrogen storage units are fixed by a fixator connected to the pulling rod; and the hydrogen storage units each include a hydrogen storage unit housing, a plurality of hydrogen storage support units in the hydrogen storage unit housing, a hydrogen fuel rod on each of the hydrogen storage support units, as well as a sensor and a heating member respectively connected to the first sealing cover and the second sealing cover through two ends of the hydrogen storage support unit. The hydrogen storage pressure vessel and the hydrogen storage system provided by the present disclosure simple structures and good machinability, achieve a strong shape adaptability, and realize hydrogen storage and supply at a normal temperature and a low pressure.

## Description

### TECHNICAL FIELD

The present disclosure belongs to the technical field of hydrogen storage, and particularly relates to a hydrogen storage pressure vessel, a hydrogen storage system and use thereof.

### BACKGROUND

At present, hydrogen storage is mainly gaseous hydrogen storage, liquid-state hydrogen storage and solid-state hydrogen storage. Gaseous hydrogen storage is mainly dominated by high pressure. For the sake of a higher volumetric hydrogen storage density, vehicle hydrogen storage systems are 35 MPa or 70 MPa ultrahigh-pressure gaseous hydrogen storage systems. Due to the high pressure, extremely high requirements are imposed on the pressure vessel. Generally, a high-pressure tank made of a carbon fiber reinforced polymer composite material is used. However, the high-pressure tank made of a carbon fiber reinforced polymer composite material has a high manufacturing cost and a low production speed, where damage in use is not easily detected. The tank damage detection can only be performed with the assistance of professional specialist and equipment. Once broken down, tanks cannot be repaired. Because of the large wall thickness, large spatial size, and fixed spherical or elliptical shape, high-pressure hydrogen storage tanks are not well adapted for actual conditions with various shapes and sizes of available spaces. Thus, application is greatly restricted. Because of hydrogen embrittlement at high pressure, the material is prone to damage failure causing leakage and thus the safety of the system is highly concerned. In addition, when the high-pressure hydrogen storage system provides the hydrogen, a special high-pressure valve and multistage pressure reduction system is required, thus increasing the cost. The pressure reduction system is highly demanded in assembly and quality detection, and is produced laboriously. This is unfavorable for automation.

Hydrogen is present in a liquid form at a certain low temperature. By compressing the hydrogen and cooling the hydrogen, liquid-state hydrogen storage can be realized. In liquid-state hydrogen storage, the volumetric hydrogen storage density is high at 70 kg/m³ specifically, but the critical temperature is -234°C. In order to maintain the temperature, large and complicated equipment is required, and thus application of the liquid-state hydrogen storage in the vehicle field is restricted. To liquefy the hydrogen, a huge amount of cooling energy is consumed and a special vessel must be used for the ultra-low temperatures. Until now, liquid-state hydrogen storage was only available for occasions where storage space is limited, such as a rocket engine.

Organic liquid-state hydrogen storage belongs to chemical storage. It makes use of an organic liquid (such as cyclohexane and methylcyclohexane) and hydrogen for a reversible hydrogenation and dehydrogenation reaction, and can achieve hydrogen absorption and desorption at a normal temperature and a normal pressure. In spite of the high gravimetric hydrogen storage density and high volumetric hydrogen storage density, organic liquid-state hydrogen storage has many drawbacks. For example, the technical operating conditions are strict. High specifications are required by catalytic hydrogenation and dehydrogenation devices demanding a high cost. The dehydrogenation reaction is carried out at a low pressure, a high temperature and complicated conditions, is restricted by a heat transfer medium and a reaction equilibrium limit, and has a low efficiency. Adverse reactions occur easily, such that the desorbed hydrogen has a low purity. Moreover, for cold start and energy compensation in the hydrogenation reaction, a few organic compounds are combusted. Therefore, it is difficult to reduce carbon emissions in the organic liquid-state hydrogen storage.

Solid-state hydrogen storage converts hydrogen into solid metal hydride through a chemical reaction, and achieve high-density, low-pressure, leak-free and safe storage for hydrogen. Compared with other hydrogen storage methods, solid-state hydrogen storage has the advantages of a high volumetric hydrogen storage density and a desirable safety performance.

In most cases, a high-pressure gas bottle is used by the existing solid-state hydrogen storage system. In terms of safety, convenience, and controllability for absorbing and releasing hydrogen, the solid-state hydrogen storage system has many problems in practical application. For now, according to existing hydrogen storage systems, complicated surrounding heat tubes are generally provided in the storage tank. For example, in patents US 8636836 B2, CN 214093991 U, CN 110542015 B and KR 20090116907 A, these structures make internal circulating tubes of hydrogen storage systems complicated, causing difficult machining and a high manufacturing cost. Moreover, a lot of space inside or outside the tank is occupied, affecting the effective hydrogen storage amount. The circulating tube is prone to leakage in long-term use. Upon coming in contact with the hydrogen storage alloys, leaked heat transfer medium is likely to cause a combustion explosion, or cause poisoning and failure of the hydrogen storage alloys. With poor safety, high cost and inconvenient use, application of solid-state hydrogen storage is greatly restricted.

Therefore, based on the above analysis, there is a need to provide a novel hydrogen storage pressure vessel, a hydrogen storage system and use thereof to solve the above problems.

### SUMMARY

In view of drawbacks in the prior art, the present disclosure provides a hydrogen storage pressure vessel and a hydrogen storage system that have simple structures and good machinability. The present disclosure achieves a strong shape adaptability, and realizes hydrogen storage and supply at a low temperature and a low pressure.

Another objective of the present disclosure is to provide use of the hydrogen storage system in a power system of a vehicle, an aircraft, a ship and a submarine.

To achieve the foregoing objectives, the present disclosure adopts the following technical solutions:
The present disclosure provides a hydrogen storage pressure vessel, including a first sealing cover, a second sealing cover, and a plurality of hydrogen storage units between the first sealing cover and the second sealing cover, where the first sealing cover, the second sealing cover and the hydrogen storage units are fixed by a pulling rod between the first sealing cover and the second sealing cover; and the hydrogen storage units are fixed by a fixator connected to the pulling rod; and
the hydrogen storage units each include a hydrogen storage unit housing, a plurality of hydrogen storage support units in the hydrogen storage unit housing, a hydrogen fuel rod made mainly of solid-state hydrogen storage alloys on each of the hydrogen storage support units, as well as a sensor and a heating member respectively connected to the first sealing cover and the second sealing cover through two ends of the hydrogen storage support unit.

The present disclosure has the following beneficial effects: The hydrogen storage units are taken as a core. The hydrogen storage units each include the hydrogen storage support unit and the hydrogen fuel rod. The hydrogen storage support unit is mainly used to fix the hydrogen fuel rod, divide the hydrogen fuel rod, assist the hydrogen fuel rod for heat exchange, and ensure a certain free volume expansion space for the hydrogen fuel rod. The hydrogen storage units are cooperated with a heating system and a sensor system, such that the hydrogen storage pressure vessel achieves a shape adaptability, and seals hydrogen at a low temperature and a low pressure for storage. The hydrogen storage pressure vessel has a simple structure, easy machinability and good safety, and can effectively seal the hydrogen for storage.

Further, the hydrogen storage support unit includes a metal disc top plate, a metal disc pressure plate, and at least two porous tubes provided between the metal disc top plate and the metal disc pressure plate and configured to penetrate through and connect the metal disc top plate and the metal disc pressure plate; and
a filter screen is attached to the metal disc top plate; at least two elastic elements are attached to the filter screen; and the other end of each of the elastic elements abuts against the metal disc pressure plate.

The present disclosure has the following beneficial effects: The hydrogen storage support unit includes the metal disc top plate and the metal disc pressure plate. The filter screen is provided on the metal disc top plate. The metal disc top plate and the metal disc pressure plate are connected and fixed through the porous tubes, and are provided therebetween with the elastic elements, such that a buffering effect is formed between the metal disc top plate and the metal disc pressure plate. Meanwhile, the hydrogen fuel rod absorbs hydrogen to cause volume expansion. After long-term use, hydrogen storage material powder is produced on a surface of the hydrogen fuel rod. The filter screen on the metal disc top plate prevents metal hydride powder from blocking the tube.

Further, a filter element is provided in an end of each of the porous tubes inserted into the metal disc top plate.

Further, the elastic element is a spring or an elastic thermally-conductive foam.

Further, a first through hole and a second through hole for penetrating through and connecting the metal disc top plate and the metal disc pressure plate, as well as a third through hole and a fourth through hole for penetrating through the heating member and the sensor, are formed correspondingly in the metal disc top plate and the metal disc pressure plate.

Further, a plurality of gas flowing micropores are further formed in the metal disc top plate and the metal disc pressure plate.

The present disclosure has the following beneficial effects: With the plurality of micropores on the metal disc top plate and the metal disc pressure plate, it is ensured that gas flowing in the hydrogen storage unit is favorable for hydrogen desorption and absorption, thereby reducing the weight of the hydrogen storage support unit. Meanwhile, with the through holes penetrating through the sensor and the heating member, the hydrogen fuel rod comes in contact with the hydrogen storage support unit, the hydrogen storage support unit comes in contact with the hydrogen storage pressure vessel, and the hydrogen storage support unit assists the hydrogen fuel rod to exchange heat with the heating system and so on.

Further, a hydrogen in-out tube is provided on the first sealing cover, and the hydrogen in-out tube is connected to the hydrogen storage unit, and configured to communicate and exchange gas with the hydrogen storage unit; the hydrogen in-out tube is connected to an integrated valve; and a filter is further provided at the integrated valve to filter hydrogen entering the hydrogen storage pressure vessel and realize hydrogen absorption and desorption of the hydrogen storage pressure vessel with the outside.

Further, a threaded hole for threadedly connecting the sensor and the heating member is formed in the second sealing cover; the sensor and the heating member are electrically connected to a controller; and the heating member is controlled through data of the sensor, thereby controlling the temperature in the hydrogen storage pressure vessel.

Further, the sensor is a temperature sensor, and the heating member is a heating rod.

Further, the fixator includes an upper end part, a lower end part, and a bolt provided at a side of the fixator and configured to connect the upper end part and the lower end part.

Another objective of the present disclosure is to provide a hydrogen storage system, including a housing composed of an upper protective cover and a lower protective cover, the hydrogen storage pressure vessel provided in the housing, a cooling system on the hydrogen storage pressure vessel, an integrated valve system provided outside the housing and configured to control hydrogen to get in or out of the hydrogen storage pressure vessel, and the controller on the housing, where the controller is electrically connected to the hydrogen storage pressure vessel, the integrated valve system and the cooling system to store and desorb hydrogen in the hydrogen storage system.

The present disclosure has the following beneficial effects: The hydrogen storage system has a strong shape adaptability, and realizes hydrogen storage and supply at a low temperature and a low pressure.

Further, the cooling system includes a first cooling cover plate and a second cooling cover plate that are configured to cover the hydrogen storage pressure vessel.

Further, the integrated valve system includes a first filter, a first one-way valve, a first high-pressure sensor, a first solenoid valve, and a second one-way valve that are connected sequentially; and the second one-way valve includes one end sequentially connected to a second high-pressure sensor, a second solenoid valve, a relief valve, a low-pressure sensor and a first pressure release safety valve, and the other end connected to a gas mass flow meter, a manual valve, a second pressure release safety valve and a hot-melting bolt.

Another objective of the present disclosure is to provide use of the hydrogen storage system in a power system of a vehicle, an aircraft, a ship and a submarine.

Further, the hydrogen storage system is used in the power system of the vehicle.

Further, when the vehicle is operating, the hydrogen in the hydrogen storage system is provided for a hydrogen fuel cell stack through the integrated valve system, and hydrogen energy is converted into electric energy; and the electric energy is stored in a vehicle cell and drives a vehicle motor.

### BRIEF DESCRIPTION OF THE DRAWINGS

FIG. 1 is a schematic structural view of a hydrogen storage pressure vessel;
FIG. 2 is a partial schematic structural view of a hydrogen storage pressure vessel;
FIG. 3 is an internal schematic structural view of a hydrogen storage unit;
FIG. 4 is a schematic structural view of a hydrogen storage support unit;
FIG. 5 is a schematic structural view of a first sealing cover;
FIG. 6 is a schematic structural view of a first sealing cover from another perspective;
FIG. 7 is a schematic structural view of a second sealing cover;
FIG. 8 is a schematic structural view of a fixator;
FIG. 9 is a schematic structural view of a hydrogen storage system;
FIG. 10 is a schematic structural exploded view of a hydrogen storage system; and
FIG. 11 is a schematic structural view of an integrated valve system.

In the figures: 1: first sealing cover, 1-1: hydrogen in-out tube, 2: second sealing cover, 2-1: first threaded hole, 2-2: second threaded hole, 3: pulling rod, 4: fixator, 4-1: upper end part of the fixator, 4-2: lower end part of the fixator, 5: hydrogen storage unit, 5-1: hydrogen storage unit housing, 5-2: hydrogen storage support unit, 5-2-1: metal disc top plate, 5-2-2: filter screen, 5-2-3: porous tube, 5-2-4: metal disc pressure plate, 5-2-5: elastic thermally-conductive foam, 5-2-6: first through hole, 5-2-7: second through hole, 5-2-8: third through hole, 5-2-9: fourth through hole, 5-2-10: micropore, 5-3: hydrogen fuel rod, 5-4: heating rod, 5-5: temperature sensor, 6: integrated valve, 7: upper protective cover, 8: lower protective cover, 9: hydrogen storage pressure vessel, 10: first cooling cover plate, 11: second cooling cover plate, 12: integrated valve system, 13: hydrogen fueling nozzle, 14: first filter, 15: first one-way valve, 16: first high-pressure sensor, 17: first solenoid valve, 18: second one-way valve, 19: second high-pressure sensor, 20: second solenoid valve, 21: relief valve, 22: low-pressure sensor, 23: first pressure release safety valve, 24: gas mass flow meter, 25: manual valve, 26: second pressure release safety valve, 27: hot-melting bolt, 28: second filter, 29: cooling system, 30: controller, 31: cell stack, and 32: cell.

### DETAILED DESCRIPTION OF THE EMBODIMENTS

The specific embodiment of the present disclosure will be described below so that those skilled in the art can understand the present disclosure, but it should be clear that the present disclosure is not limited to the scope of the specific embodiment. For those of ordinary skill in the art, as long as various changes fall within the spirit and scope of the present disclosure defined and determined by the appended claims, these changes are apparent, and all inventions and creations using the concept of the present disclosure are protected.

### Embodiment 1

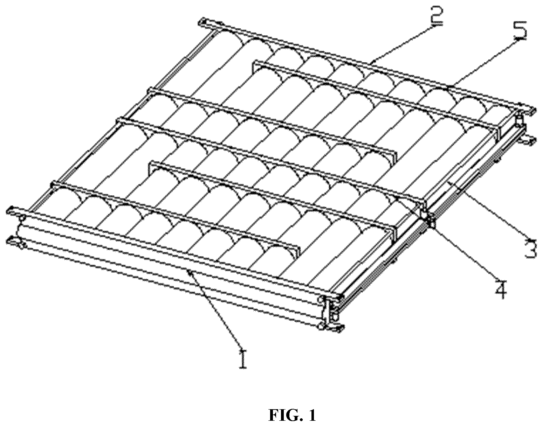

As shown in FIG. 1, a hydrogen storage pressure vessel provided by the embodiment includes first sealing cover 1, second sealing cover 2, and a plurality of hydrogen storage units 5 between the first sealing cover 1 and the second sealing cover 2. The first sealing cover 1, the second sealing cover 2 and the plurality of hydrogen storage units 5 are fixed by pulling rod 3 between the first sealing cover 1 and the second sealing cover 2. The hydrogen storage units 5 are fixed by fixator 4 connected to the pulling rod 3.

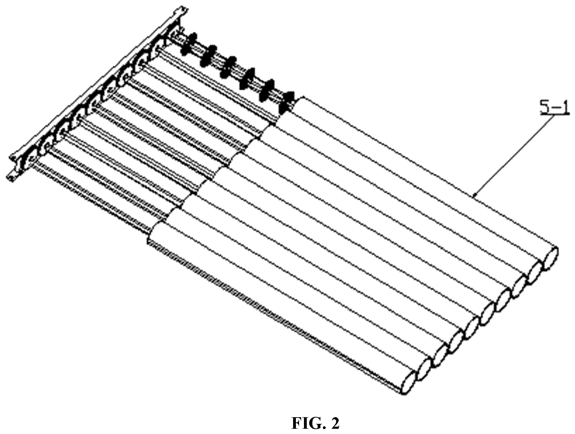

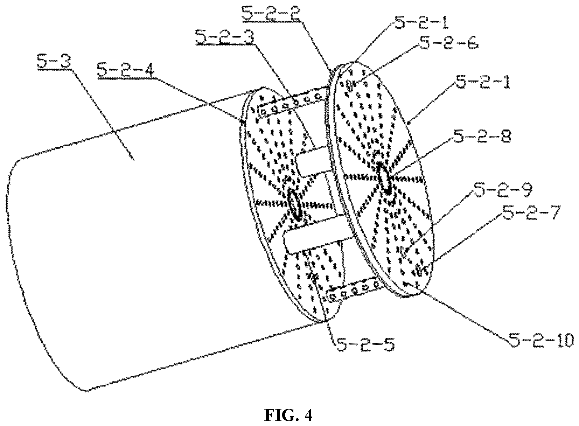

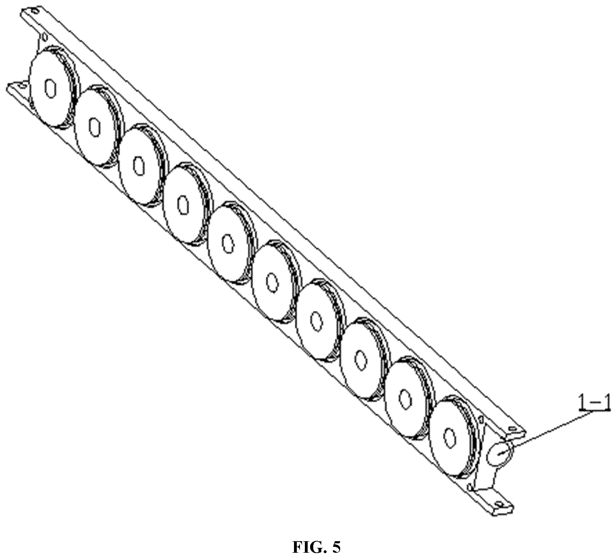

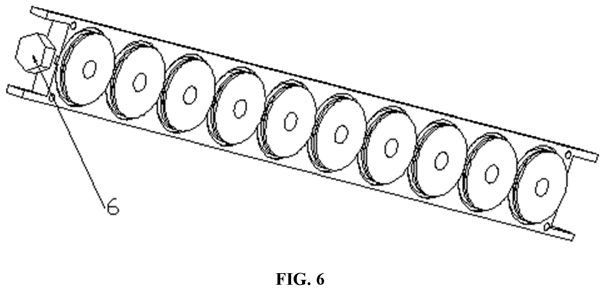

As shown in FIGS. 1-10, the first sealing cover 1 is provided with hydrogen in-out tube 1-1. The hydrogen in-out tube is connected to each of the hydrogen storage units 5 to communicate and exchange gas with the hydrogen storage unit 5 in the hydrogen storage pressure vessel, and connected to integrated valve 6 to realize hydrogen desorption and refueling of the hydrogen storage pressure vessel. Second filter 28 configured to filter hydrogen entering the hydrogen storage pressure vessel and desorbed from the hydrogen storage pressure vessel is further provided at a junction between the hydrogen in-out tube and the integrated valve 6. A threaded hole, including first threaded hole 2-1 for fixing a heating rod and second threaded hole 2-2 for fixing a temperature sensor, is formed in the second sealing cover 2. The temperature sensor 5-5 and the heating rod 5-4 are electrically connected to controller 30. The heating rod 5-4 is controlled through data of the temperature sensor 5-5, thereby controlling a temperature in the hydrogen storage pressure vessel.

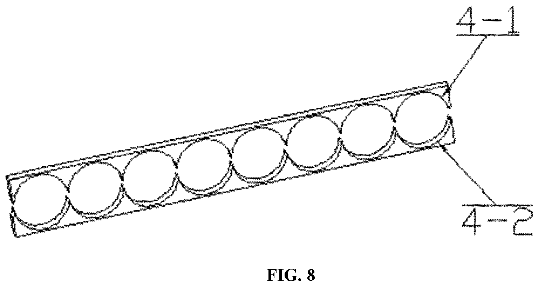

As shown in FIG. 8, the fixator 4 includes upper end part 4-1, lower end part 4-2, and a bolt provided at a side of the fixator and configured to connect the upper end part 4-1 and the lower end part 4-2. The fixator 4 is mainly configured to fix the hydrogen storage unit 5, for ease of assembly in machining. Upon assembly, the fixator 4 is formed into a whole with the pulling rod 3, the first sealing cover 1 and the second sealing cover 2, thereby improving an overall rigidity of a system.

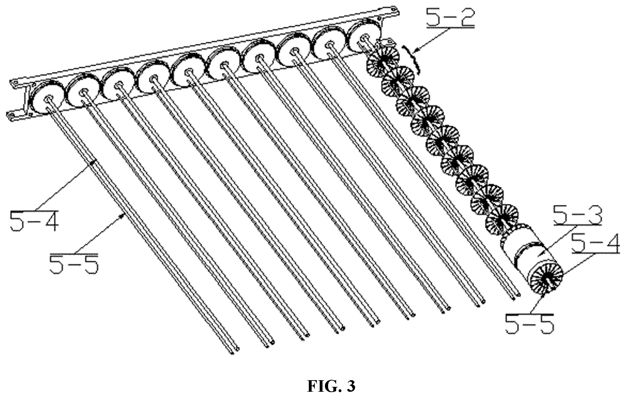

As shown in FIG. 3, according to an embodiment of the present disclosure, the hydrogen storage unit 5 includes hydrogen storage unit housing 5-1, a plurality of hydrogen storage support units 5-2 in the hydrogen storage unit housing 5-1, hydrogen fuel rod 5-3 on each of the hydrogen storage support units 5-2, as well as temperature sensor 5-5 and heating rod 5-4 respectively connected to the first sealing cover 1 and the second sealing cover 2 through two ends of the hydrogen storage support unit 5-2. A plurality of the hydrogen fuel rods 5-3 are provided in the hydrogen storage unit 5. A hydrogen storage alloy material serves as a hydrogen storage medium. By controlling an alloying component, metal hydride absorbs hydrogen at a certain temperature and a certain pressure. After heating, the metal hydride releases absorbed hydrogen. This is reversible reaction, without an additional chemical additive and an additional catalyst. The hydrogen fuel rod 5-3 can be prepared into an adaptable block according to a unit shape of the pressure vessel. The block is prepared by pressing or sintering hydrogen storage alloy particles and an additive.

According to the present disclosure, the hydrogen storage units 5 are taken as a core. The hydrogen storage units 5 each include the hydrogen storage support unit 5-2 and the hydrogen fuel rod 5-3. The hydrogen storage support unit 5-2 is mainly used to fix the hydrogen fuel rod 5-3, divide the hydrogen fuel rod 5-3, assist the hydrogen fuel rod for heat exchange, and ensure a certain free volume expansion space for the hydrogen fuel rod. The hydrogen storage units 5 are cooperated with a heating system and a sensor system, such that the hydrogen storage pressure vessel achieves a shape adaptability, and seals hydrogen at a low temperature and a low pressure for storage. The hydrogen storage pressure vessel has a simple structure, easy machinability and good safety, and can effectively seal the hydrogen for storage.

As shown in FIGS. 1-4, according to an embodiment of the present disclosure, the hydrogen storage support unit 5-2 includes metal disc top plate 5-2-1 and metal disc pressure plate 5-2-4. Porous tubes 5-2-3 for penetrating through and connecting the metal disc top plate and the metal disc pressure plate are provided between the metal disc top plate 5-2-1 and the metal disc pressure plate 5-2-4. A filter element is provided in an end of each of the porous tubes 5-2-3 inserted into the metal disc top plate 5-2-1.

Filter screen 5-2-2 is attached to the metal disc top plate 5-2-1. Two springs or elastic thermally-conductive foams 5-2-5 are attached to the filter screen 5-2-2. The other end of each of the springs or the elastic thermally-conductive foams abuts against the metal disc pressure plate 5-2-4.

First through hole 5-2-6 and second through hole 5-2-7 for penetrating through and connecting the metal disc top plate and the metal disc pressure plate, as well as third through hole 5-2-8 and fourth through hole 5-2-9 for penetrating through the heating rod 5-4 and the temperature sensor 5-5, are formed correspondingly in the metal disc top plate 5-2-1 and the metal disc pressure plate 5-2-4. A plurality of gas flowing micropores 5-2-10 are further formed in the metal disc top plate 5-2-1 and the metal disc pressure plate 5-2-4.

The hydrogen storage support unit 5-2 includes the metal disc top plate 5-2-1 and the metal disc pressure plate 5-2-4. The filter screen 5-2-2 is provided on the metal disc top plate 5-2-1. The metal disc top plate 5-2-1 and the metal disc pressure plate 5-2-4 are connected and fixed through the porous tubes 5-2-3, and are provided therebetween with the elastic elements, such that a buffering effect is formed between the metal disc top plate 5-2-1 and the metal disc pressure plate 5-2-4. Meanwhile, the hydrogen fuel rod 5-3 absorbs hydrogen to cause volume expansion. After long-term use, hydrogen storage material powder is produced on a surface of the hydrogen fuel rod. The filter screen 5-2-1 on the metal disc top plate 5-2-1 prevents metal hydride powder from blocking the tube.

With the plurality of micropores 5-2-10 on the metal disc top plate 5-2-1 and the metal disc pressure plate 5-2-4, it is ensured that gas flowing in the hydrogen storage unit 5 is favorable for hydrogen desorption and absorption, thereby reducing a weight of the hydrogen storage support unit 5-2. Meanwhile, with the through holes penetrating through the temperature sensor and the heating rod, the hydrogen fuel rod 5-3 comes in contact with the hydrogen storage support unit 5-2, the hydrogen storage support unit 5-2 comes in contact with the hydrogen storage pressure vessel, and the hydrogen storage support unit 5-2 assists the hydrogen fuel rod 5-3 to exchange heat with the heating system and so on.

### Embodiment 2

The embodiment makes a further improvement based on the hydrogen storage pressure vessel in Embodiment 1.

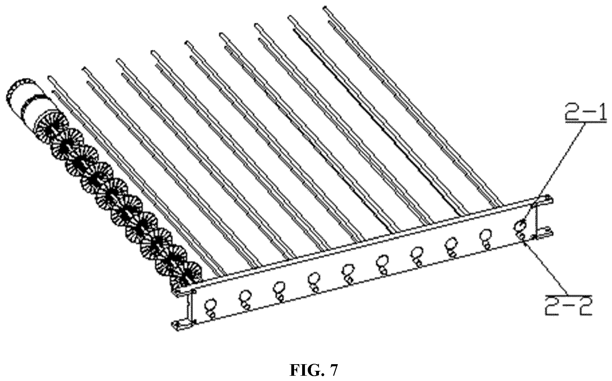

As shown in FIG. 7, a hydrogen storage system provided by the present disclosure includes a housing composed of upper protective cover 7 and lower protective cover 8, the hydrogen storage pressure vessel provided in the housing and obtained in Embodiment 1, a cooling system on the hydrogen storage pressure vessel, integrated valve system 12 provided outside the housing and configured to control hydrogen to get in or out of the hydrogen storage pressure vessel, and the controller 30 on the housing. The controller 30 is electrically connected to the hydrogen storage pressure vessel, the integrated valve system and the cooling system to store and desorb hydrogen in the hydrogen storage system.

The upper protective cover 7 and the lower protective cover 8 may be made of a metal material and/or a high polymer material such as engineering plastic, and a composite material. They are mainly effective in waterproof, dustproof, heat-preserving and fireproof aspects, and function to assist hydrogen leakage detection and quick hydrogen desorption.

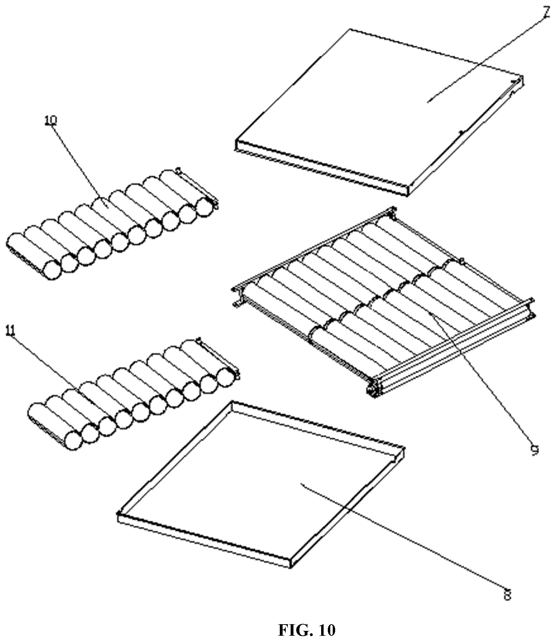

According to an embodiment of the present disclosure, as shown in FIG. 10, the cooling system includes a first cooling cover plate 10 and a second cooling cover plate 11. The first cooling cover plate 10 and the second cooling cover plate 11 are fabricated by micro-channel aluminum plate compression forming. Circulating water is used in a tube for cooling.

According to an embodiment of the present disclosure, the integrated valve system 12 includes a first filter 14, a first one-way valve 15, a first high-pressure sensor 16, a first solenoid valve 17, and a second one-way valve 18 that are connected sequentially. The second one-way valve 18 includes one end sequentially connected to second high-pressure sensor 19, second solenoid valve 20, relief valve 21, low-pressure sensor 22 and first pressure release safety valve 23, and the other end connected to gas mass flow meter 24, manual valve 25, second pressure release safety valve 26 and hot-melting bolt 27.

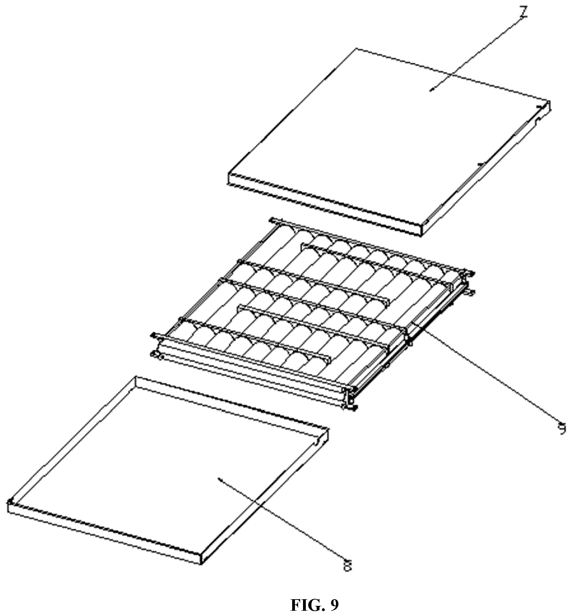

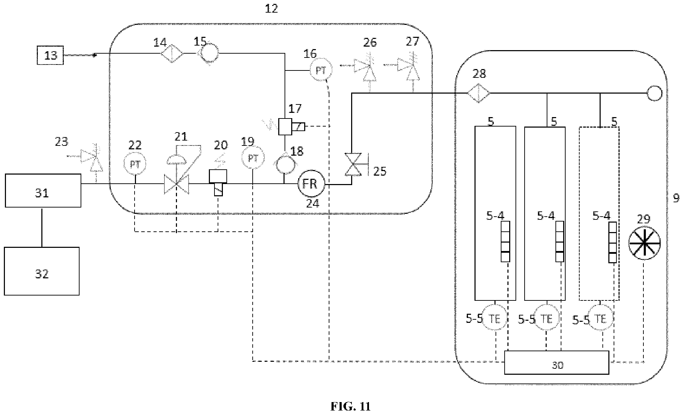

The hydrogen storage system provided by the embodiment has the following working principle: As shown in FIGS. 9-11, hydrogen is refueled by hydrogen fueling nozzle 13. The hydrogen passes through the first filter 14 and the first one-way valve 15, and is sensed by the first high-pressure sensor 16. When a pressure reaches a specified value, the controller 30 turns on the first solenoid valve 17 and turns off the second solenoid valve 20, such that the hydrogen flows to the hydrogen storage pressure vessel 9. A hydrogen inflow is measured by the gas mass flow meter 24 and stored in the controller 30, so as to calculate a remaining hydrogen storage capacity in the system. The hydrogen entering the hydrogen storage pressure vessel 9 passes through the second filter 28 and is distributed to the hydrogen storage units 5. The hydrogen reacts with the hydrogen storage material through an exothermic reaction, and a temperature is measured by the temperature sensor 5-5. The controller 30 turns on the cooling system. That is, a temperature of the hydrogen storage material is reduced through the first cooling cover plate 10 and the second cooling cover plate 11, thereby quickly absorbing and storing the hydrogen.

When a vehicle is operating, the controller 30 turns off the first solenoid valve 17, turns on the second solenoid valve 20, and turns on the heating system and the cooling system. The controller 30 measures a temperature through the temperature sensor 5-5, thereby accurately controlling the temperature of the hydrogen storage material. The hydrogen is desorbed by heating the hydrogen storage material. A hydrogen outflow is measured by the gas mass flow meter 24 and stored in the controller 30, so as to calculate a remaining hydrogen storage capacity in the system. The controller 30 can control the relief valve 21 to provide a low pressure for the cell stack 31 system, and detects a pressure of output gas through the low-pressure sensor 22.

In the above integrated valve system 12, the first high-pressure sensor 16 and the second high-pressure sensor 19 are connected to the controller 30, and can respectively detect an input pressure and an output pressure of the system. When the pressure is greater than a safe value, the tube is closed automatically through the first solenoid valve 17 and the second solenoid valve 20, thereby stopping the hydrogen flow, and protecting the cell stack 31 and the hydrogen storage system.

### Embodiment 3

The embodiment makes a further improvement based on the hydrogen storage system in Embodiment 2. The embodiment provides use of the hydrogen storage system in a power system of a vehicle, an aircraft, a ship and a submarine.

According to an embodiment of the present disclosure, and particularly in the use of the hydrogen storage system in the power system of the vehicle, a vehicle hydrogen storage system mainly includes the integrated valve system 12 and the hydrogen storage pressure vessel 9. The integrated valve system 12 controls hydrogen to get in or out of the hydrogen storage pressure vessel 9. In response to the hydrogen refueling, hydrogen from a hydrogen fueling station is stored to the hydrogen storage pressure vessel 9 by the integrated valve system 12. In response to the operation of the vehicle, the hydrogen in the hydrogen storage pressure vessel 9 is controllably provided for the cell stack 31 through the integrated valve system 12. The hydrogen is converted into electric energy by the cell stack 31. The electric energy is stored in a cell 32 or directly drives a vehicle motor.

In conclusion, the hydrogen storage pressure vessel and the hydrogen storage system provided by the present disclosure have the following advantages:
(1) According to the present disclosure, the hydrogen storage units are taken as a core. The hydrogen storage units each include the hydrogen storage support unit and the hydrogen fuel rod. The hydrogen storage support unit is mainly used to fix the hydrogen fuel rod, divide the hydrogen fuel rod, assist the hydrogen fuel rod for heat exchange, and ensure a certain free volume expansion space for the hydrogen fuel rod. The hydrogen storage units are cooperated with a heating system and a sensor system, such that the hydrogen storage pressure vessel achieves a shape adaptability, and seals hydrogen at a low temperature and a low pressure for storage. The hydrogen storage pressure vessel has a simple structure, easy machinability and good safety, and can effectively seal the hydrogen for storage.
(2) By providing the hydrogen storage pressure vessel and the matched heating system and cooling system, the hydrogen storage system in the present disclosure has a simple structure, desirable safety and convenience in use, achieves a strong shape adaptability, and realizes hydrogen storage and supply at a normal temperature and a low pressure.

## Claims

1. A hydrogen storage pressure vessel, **characterized by** comprising a first sealing cover, a second sealing cover, and a plurality of hydrogen storage units between the first sealing cover and the second sealing cover, wherein the first sealing cover, the second sealing cover and the plurality of hydrogen storage units are fixed by a pulling rod between the first sealing cover and the second sealing cover; and the hydrogen storage units are fixed by a fixator connected to the pulling rod; and
the hydrogen storage units each comprise a hydrogen storage unit housing, a plurality of hydrogen storage support units in the hydrogen storage unit housing, a hydrogen fuel rod on each of the hydrogen storage support units, as well as a sensor and a heating member respectively connected to the first sealing cover and the second sealing cover through two ends of the hydrogen storage support unit.

2. The hydrogen storage pressure vessel according to claim 1, **characterized in that** the hydrogen storage support unit comprises a metal disc top plate, a metal disc pressure plate, and at least two porous tubes provided between the metal disc top plate and the metal disc pressure plate and configured to penetrate through and connect the metal disc top plate and the metal disc pressure plate; and
a filter screen is attached to the metal disc top plate; at least two elastic elements are attached to the filter screen; and the other end of each of the elastic elements abuts against the metal disc pressure plate.

3. The hydrogen storage pressure vessel according to claim 2, **characterized in that** a filter element is provided in an end of each of the porous tubes inserted into the metal disc top plate.

4. The hydrogen storage pressure vessel according to claim 2, **characterized in that** the elastic element is a spring or an elastic thermally-conductive foam.

5. The hydrogen storage pressure vessel according to claim 2, **characterized in that** a first through hole and a second through hole for penetrating through and connecting the metal disc top plate and the metal disc pressure plate, as well as a third through hole and a fourth through hole for penetrating through the heating member and the sensor, are formed correspondingly in the metal disc top plate and the metal disc pressure plate.

6. The hydrogen storage pressure vessel according to claim 5, **characterized in that** a plurality of gas flowing micropores are further formed in the metal disc top plate and the metal disc pressure plate.

7. The hydrogen storage pressure vessel according to claim 1, **characterized in that** a hydrogen in-out tube is provided on the first sealing cover, and the hydrogen in-out tube is connected to the hydrogen storage unit, and configured to communicate and exchange gas with the hydrogen storage unit; and the hydrogen in-out tube is connected to an integrated valve, a filter element is internally provided at a junction between the hydrogen in-out tube and the integrated valve and configured to filter hydrogen entering the hydrogen storage pressure vessel, so as to realize hydrogen absorption and desorption of the hydrogen storage pressure vessel with the outside.

8. The hydrogen storage pressure vessel according to claim 1, **characterized in that** a threaded hole for threadedly connecting the sensor and the heating member is formed in the second sealing cover; the sensor and the heating member are electrically connected to a controller; and the heating member is controlled through data of the sensor, thereby controlling a temperature in the hydrogen storage pressure vessel.

9. The hydrogen storage pressure vessel according to claim 1, **characterized in that** the sensor is a temperature sensor, and the heating member is a heating rod.

10. The hydrogen storage pressure vessel according to claim 1, **characterized in that** the fixator comprises an upper end part, a lower end part, and a bolt provided at a side of the fixator and configured to connect the upper end part and the lower end part.

11. A hydrogen storage system, **characterized by** comprising a housing composed of an upper protective cover and a lower protective cover, the hydrogen storage pressure vessel according to any one of claims 1 to 10 that is provided in the housing, a cooling system on the hydrogen storage pressure vessel, and an integrated valve system provided outside the housing and configured to control hydrogen to get in or out of the hydrogen storage pressure vessel; and
the controller on the housing, wherein the controller is electrically connected to the hydrogen storage pressure vessel, the integrated valve system and the cooling system to store and desorb hydrogen in the hydrogen storage system.

12. The hydrogen storage system according to claim 11, **characterized in that** the cooling system comprises a first cooling cover plate and a second cooling cover plate that are configured to cover the hydrogen storage pressure vessel.

13. The hydrogen storage system according to claim 11, **characterized in that** the integrated valve system comprises a first filter, a first one-way valve, a first high-pressure sensor, a first solenoid valve, and a second one-way valve that are connected sequentially; and the second one-way valve comprises one end sequentially connected to a second high-pressure sensor, a second solenoid valve, a relief valve, a low-pressure sensor and a first pressure release safety valve, and the other end connected to a gas mass flow meter, a manual valve, a second pressure release safety valve and a hot-melting bolt.

14. Use of the hydrogen storage system according to any one of claims 11 to 13 in a power system of a vehicle, an aircraft, a ship and a submarine.

15. The use of the hydrogen storage system in the power system of the vehicle, the aircraft, the ship and the submarine according to claim 14, comprising the use of the hydrogen storage system in the power system of the vehicle, wherein when the vehicle is operating, the hydrogen in the hydrogen storage system is provided for a cell stack through the integrated valve system, and hydrogen energy is converted into electric energy; and the electric energy is stored in a vehicle cell and drives a vehicle motor.

## Amended claims

### Amended claims in accordance with Rule 137(2) EPC.

1. A hydrogen storage pressure vessel, **characterized by** comprising a first sealing cover, a second sealing cover, and a plurality of hydrogen storage units between the first sealing cover and the second sealing cover, wherein the first sealing cover, the second sealing cover and the plurality of hydrogen storage units are fixed by a pulling rod between the first sealing cover and the second sealing cover; and the hydrogen storage units are fixed by a fixator connected to the pulling rod; and
the hydrogen storage units each comprise a hydrogen storage unit housing, a plurality of hydrogen storage support units in the hydrogen storage unit housing, a hydrogen fuel rod on each of the hydrogen storage support units, as well as a sensor and a heating member respectively connected to the first sealing cover and the second sealing cover through two ends of the hydrogen storage support unit and
a threaded hole for threadedly connecting the sensor and the heating member is formed in the second sealing cover; the sensor and the heating member are electrically connected to a controller; and the heating member is controlled through data of the sensor, thereby controlling a temperature in the hydrogen storage pressure vessel.

2. The hydrogen storage pressure vessel according to claim 1, **characterized in that** the hydrogen storage support units comprise a metal disc top plate, a metal disc pressure plate, and at least two porous tubes provided between the metal disc top plate and the metal disc pressure plate and configured to penetrate through and connect the metal disc top plate and the metal disc pressure plate; and
a filter screen is attached to the metal disc top plate; at least two elastic elements are attached to the filter screen; and the other end of each of the elastic elements abuts against the metal disc pressure plate.

3. The hydrogen storage pressure vessel according to claim 2, **characterized in that** a filter element is provided in an end of each of the porous tubes inserted into the metal disc top plate.

4. The hydrogen storage pressure vessel according to claim 2, **characterized in that** the elastic element is a spring or an elastic thermally-conductive foam.

5. The hydrogen storage pressure vessel according to claim 2, **characterized in that** a first through hole and a second through hole for penetrating through and connecting the metal disc top plate and the metal disc pressure plate, as well as a third through hole and a fourth through hole for penetrating through the heating member and the sensor, are formed correspondingly in the metal disc top plate and the metal disc pressure plate.

6. The hydrogen storage pressure vessel according to claim 5, **characterized in that** a plurality of gas flowing micropores are further formed in the metal disc top plate and the metal disc pressure plate.

7. The hydrogen storage pressure vessel according to claim 1, **characterized in that** a hydrogen in-out tube is provided on the first sealing cover, and the hydrogen in-out tube is connected to the hydrogen storage unit, and configured to communicate and exchange gas with the hydrogen storage unit; and the hydrogen in-out tube is connected to an integrated valve, a filter element is internally provided at a junction between the hydrogen in-out tube and the integrated valve and configured to filter hydrogen entering the hydrogen storage pressure vessel, so as to realize hydrogen absorption and desorption of the hydrogen storage pressure vessel with the outside.

8. The hydrogen storage pressure vessel according to claim 1, **characterized in that** the sensor is a temperature sensor, and the heating member is a heating rod.

9. The hydrogen storage pressure vessel according to claim 1, **characterized in that** the fixator comprises an upper end part, a lower end part, and a bolt provided at a side of the fixator and configured to connect the upper end part and the lower end part.

10. A hydrogen storage system, **characterized by** comprising a housing composed of an upper protective cover and a lower protective cover, the hydrogen storage pressure vessel according to any one of claims 1 to 10 that is provided in the housing, a cooling system on the hydrogen storage pressure vessel, and an integrated valve system provided outside the housing and configured to control hydrogen to get in or out of the hydrogen storage pressure vessel; and
the controller on the housing, wherein the controller is electrically connected to the hydrogen storage pressure vessel, the integrated valve system and the cooling system to store and desorb hydrogen in the hydrogen storage system.

11. The hydrogen storage system according to claim 10, **characterized in that** the cooling system comprises a first cooling cover plate and a second cooling cover plate that are configured to cover the hydrogen storage pressure vessel.

12. The hydrogen storage system according to claim 10, **characterized in that** the integrated valve system comprises a first filter, a first one-way valve, a first high-pressure sensor, a first solenoid valve, and a second one-way valve that are connected sequentially; and the second one-way valve comprises one end sequentially connected to a second high-pressure sensor, a second solenoid valve, a relief valve, a low-pressure sensor and a first pressure release safety valve, and the other end connected to a gas mass flow meter, a manual valve, a second pressure release safety valve and a hot-melting bolt.

13. Use of the hydrogen storage system according to any one of claims 10 to 12 in a power system of a vehicle, an aircraft, a ship and a submarine.

14. The use of the hydrogen storage system in the power system of the vehicle, the aircraft, the ship and the submarine according to claim 13, comprising the use of the hydrogen storage system in the power system of the vehicle, wherein when the vehicle is operating, the hydrogen in the hydrogen storage system is provided for a cell stack through the integrated valve system, and hydrogen energy is converted into electric energy; and the electric energy is stored in a vehicle cell and drives a vehicle motor.
